# EUROPEAN PATENT SPECIFICATION

(11) **EP 4 529 424 B1**
(45) Date of publication and mention of the grant of the patent: **25.02.2026**
(21) Application number: 23727963.3
(22) Date of filing: 16.05.2023
(51) Int. Cl.: A23N 1/00, A47J 19/02

(54) **JUICE EXTRACTION DEVICE FOR FRUIT AND VEGETABLE PRODUCTS**
SAFTGEWINNUNGSVORRICHTUNG FÜR OBST- UND GEMÜSEPRODUKTE
DISPOSITIF D'EXTRACTION DE JUS POUR PRODUITS DE TYPE FRUITS ET LÉGUMES

(30) Priority: 23.05.2022 IT 202200010613
(43) Date of publication of application: 02.04.2025
(73) Proprietor: Oranfresh S.r.l., 95100 Catania (IT)
(72) Inventor: CATALANO, Marcello Nunzio, 95123 Catania (IT); TORRISI, Salvatore Maria Vittorio, 95127 Catania (IT)
(74) Representative: Modiano, Micaela Nadia
(86) International application number: PCT/EP2023/063163
(87) International publication number: WO 2023/227425

(56) References cited:
- EP-A1- 0 559 260
- WO-A1-2015/014891
- DE-A1- 10 142 502

## Description

The present invention relates to a juice extraction device for fruit and vegetable products.

As is known, the extraction of juice from oranges, lemons, grapefruit, other citrus fruits, pomegranates, other fruits or fruit and vegetable products makes it possible to obtain juices that can be enjoyed individually or appreciated as ingredients of cocktails and other beverages.

The juice extraction can be executed manually or using special devices, automatic or semiautomatic, which are widely adopted both for domestic use (in private dwellings) and professional use (for example in bars, restaurants, canteens, etc.).

In particular, devices are known which are provided with one or more pairs of rotating elements, which interact with each other for the juice extraction of products that have been cut beforehand, till the juice is obtained which, conveniently filtered of seeds, impurities and the like, is then conveyed toward a collection area, where a drinking glass can be placed. WO2015/014891 A1 discloses a juice extraction device.

The outline configuration described above is reproduced in several types of implementation solutions, some completely automatic, others requiring an at least partial participation of the user.

In any case, in each one of them it is possible to note some drawbacks: it must be noted in fact that the need is increasingly felt to wash the rotors and in general the components that interact with the products to be juiced sufficiently regularly, in order to maintain optimal conditions of hygiene over time.

By contrast, the architecture of the machine is often designed solely in order to ensure an optimal interaction between the rotors, the respective kinetic movement mechanisms and the other elements intended for the correct performance of the juicing, without keeping in due consideration the need described above. Therefore, for the user it is often inconvenient, if not impossible, to execute the temporary disassembly of individual components or subassemblies, as is desirable in order to be able to easily wash them in a sink before reassembly.

The need is therefore felt to simplify the interaction between the user and the components of the device, precisely in order to allow rapid and straightforward disassembly and reassembly for those assemblies or components that require frequent washing and in any case particular attention.

The aim of the present invention is to solve the above-mentioned problems, by providing a juice extraction device that offers practical methods of temporary disassembly of subassemblies and individual components.

Within this aim, an object of the invention is to provide a juice extraction device that makes it possible to temporarily dismount the subassembly designed for the juicing, in a rapid and straightforward manner.

Another object of the invention is to provide a structure that makes it possible to temporarily dismount the subassembly designed to perform the juicing, for different types of juicing devices.

Another object of the invention is to provide a juice extraction device that ensures a high reliability of operation.

Another object of the invention is to provide a juice extraction device that adopts an alternative technical structure to those of conventional devices.

Another object of the invention is to provide a juice extraction device that can be easily implemented using elements and materials that are readily available on the market.

Another object of the invention is to provide a juice extraction device that is of low cost and safely applied.

This aim and these and other objects which will become better apparent hereinafter are achieved by a juice extraction device according to claim 1.

Further characteristics and advantages of the invention will become better apparent from the description of two preferred, but not exclusive, embodiments of the device according to the invention, illustrated by way of non-limiting example in the accompanying drawings wherein:
Figures 1 to 10 show the juice extraction device according to the invention, in the first embodiment, and more specifically:
Figure 1 is an exploded perspective view of the device according to the invention;
Figure 2 is a perspective view of the device of Figure 1;
Figures 3 and 4 are respectively a front elevation view and a side view of the device of Figure 1;
Figure 5 is a view from above of the device of Figure 1;
Figure 6 is a view from above of the device of Figure 6, with some covering elements removed;
Figure 7 is a perspective view of the tub of the device of Figure 1;
Figures 8 and 9 are perspective views respectively of the juice extraction rotor and the conveyance rotor of the device of Figure 1;
Figure 10 is a perspective view of a subassembly of the device of Figure 1, comprising the juice extraction rotor and the conveyance rotor;
Figures 11 to 17 show the juice extraction device according to the invention, in the first embodiment, and more specifically:

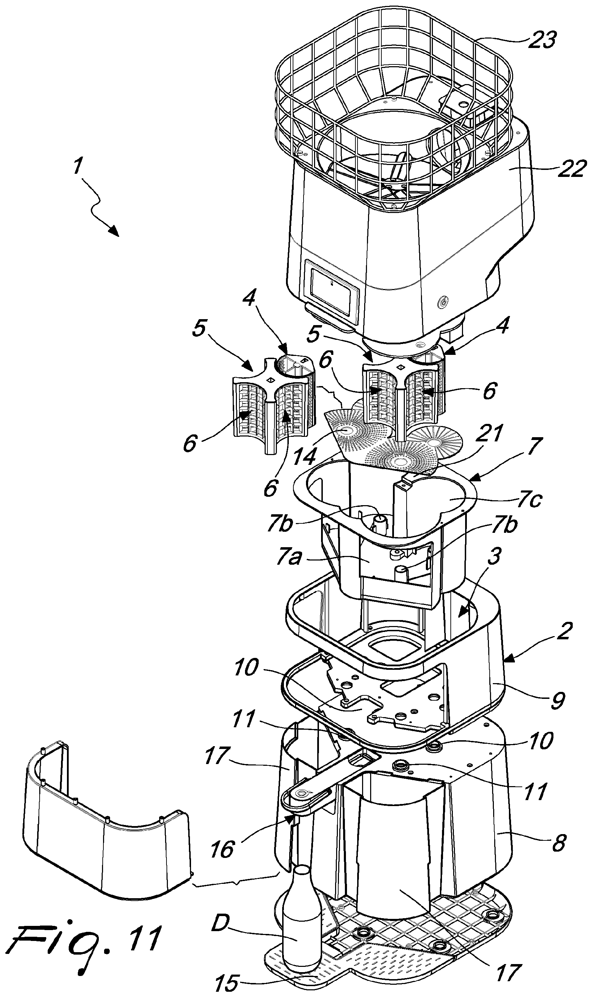

   Figure 11 is an exploded perspective view of the device according to the invention;

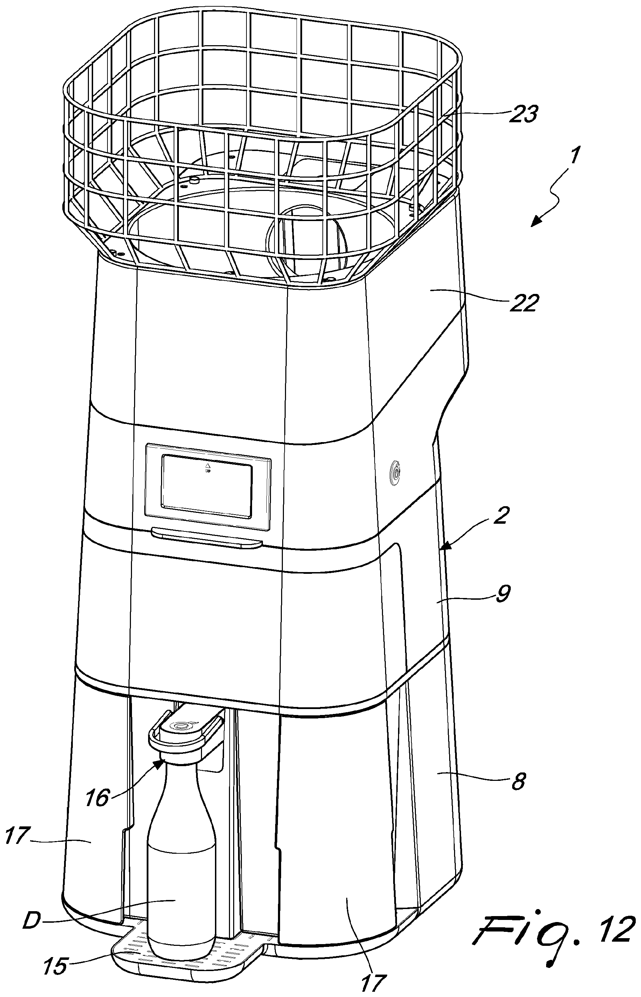

   Figure 12 is a perspective view of the device of Figure 11;

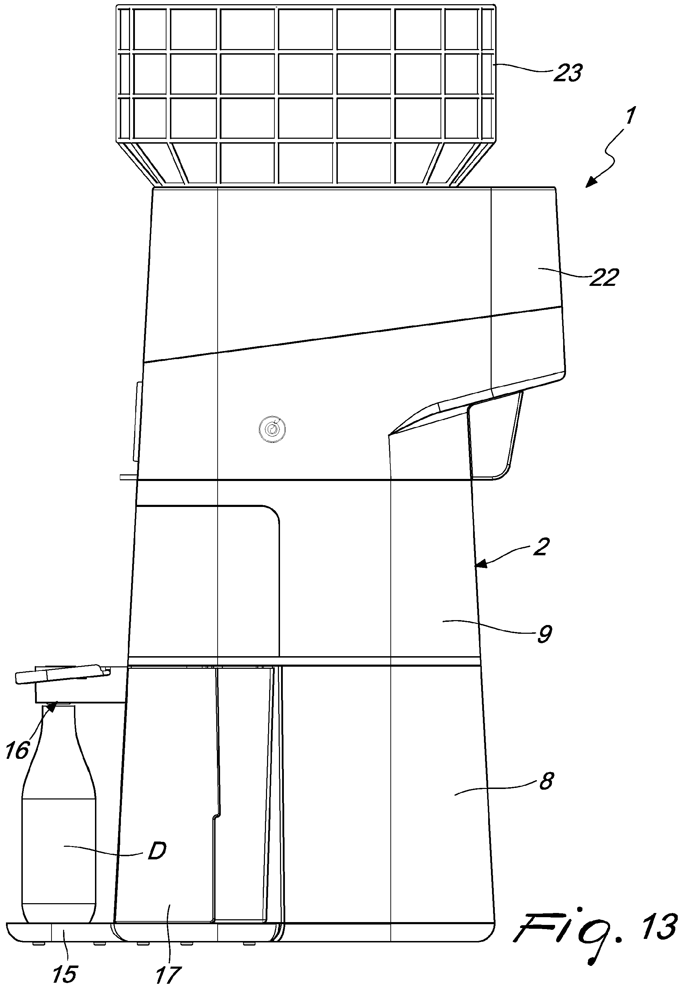

   Figure 13 is a side view of the device in Figure 11;

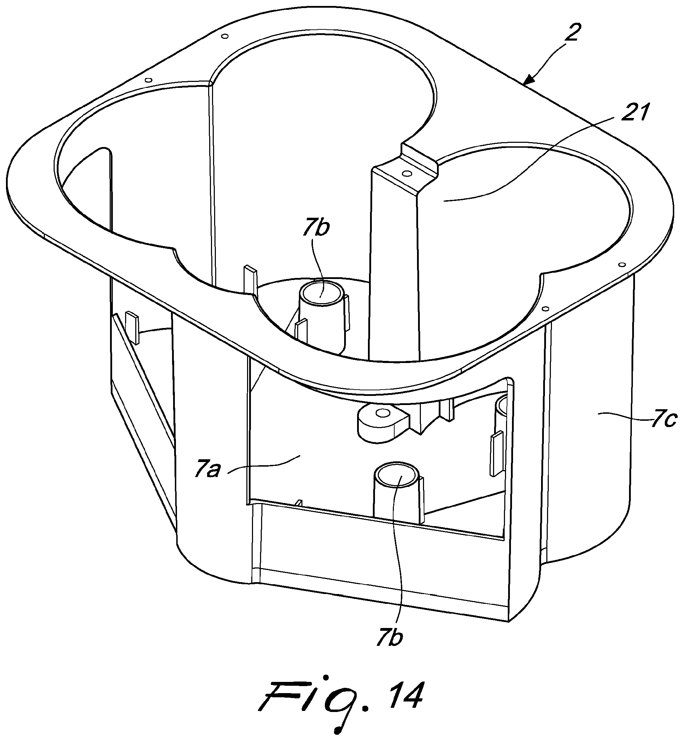

   Figure 14 is a perspective view of the tub of the device of Figure 11;

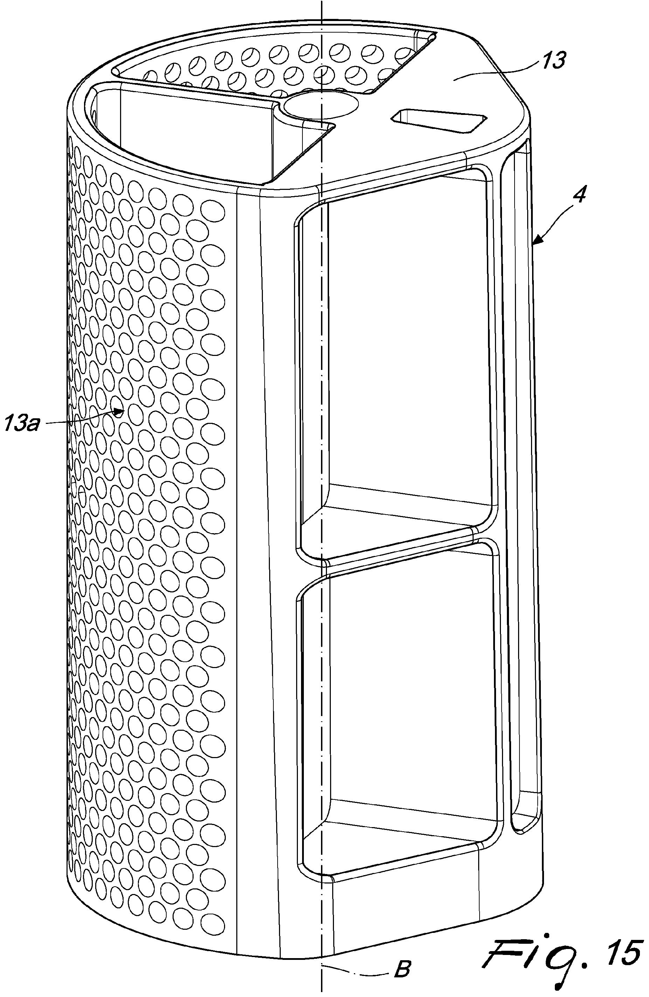

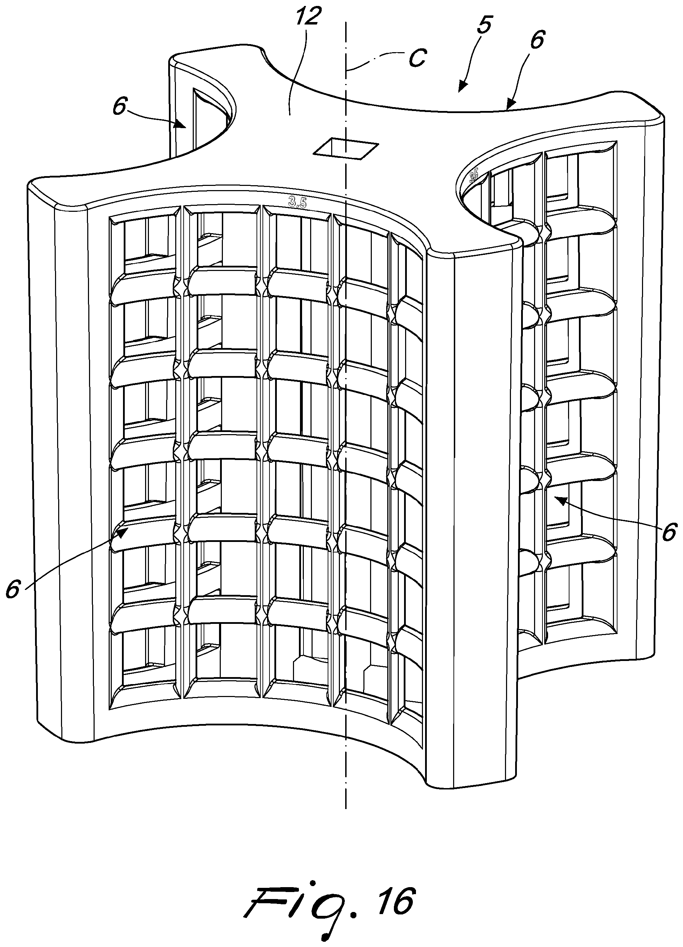

   Figures 15 and 16 are perspective views respectively of a juice extraction rotor and a conveyance rotor of the device of Figure 11;

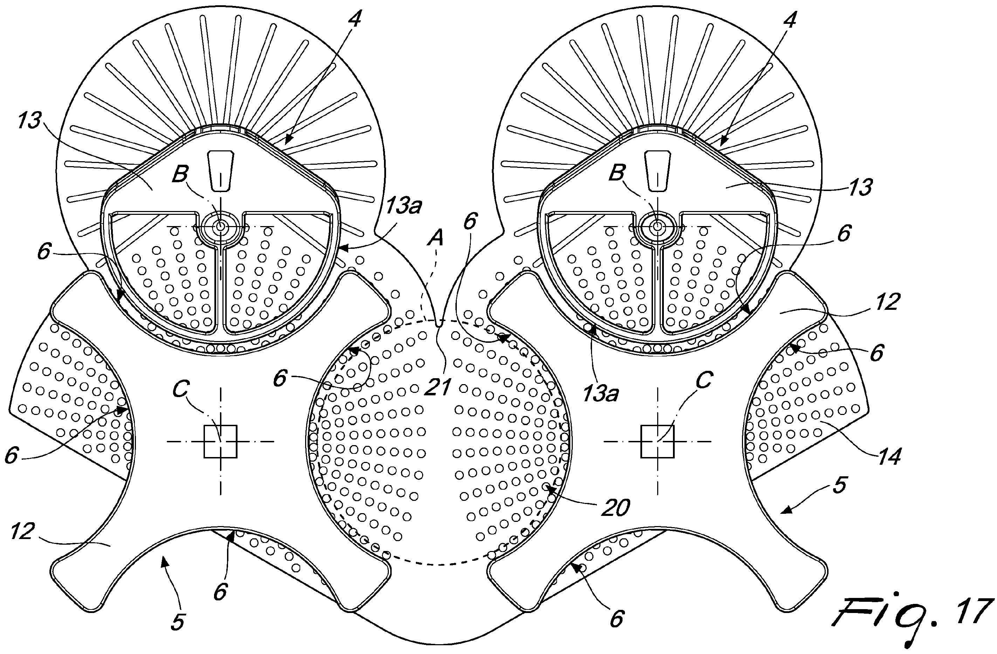

   Figure 17 is a view from above of a subassembly of the device of Figure 11, comprising the juice extraction rotors and the conveyance rotors.

With particular reference to the figures, the reference numeral 1 generally designates a juice extraction device for fruit and vegetable products A.

In this regard, it is emphasized that in the preferred application the device 1 is intended for extracting juice from products A constituted by oranges or other citrus fruits; at the same time, the scope of protection claimed herein includes the possibility that the device 1 can be configured or in any case used for the juice extraction of other fruit and vegetable products A, in particular (but not limited to) spheroid fruits without stones such as pomegranates, mangoes, apples, etc.

Furthermore, as will be better explained below, the device 1 can be fed with products A that have been cut beforehand (typically, into two hemispherical portions) or are still whole (in the latter case, leaving it to the device 1 to cut them, into preferably hemispherical portions).

The device 1 can be used in any environment and in particular it can be used in private dwellings or in any case in a domestic setting (in particular, but not only, in the embodiment that receives pre-cut fruits); likewise, the device 1 can be positively adopted in professional contexts, and therefore for bars, canteens, restaurants, diners/cafeterias and any other commercial concern geared to serve food and drink. In these latter cases, the embodiment of the device 1 that also handles the cutting may be preferred (thereby freeing the operator from this task) but the possibility is not ruled out of also using the embodiment that requires cutting beforehand in such contexts.

The device 1 comprises an outer shell 2 which internally defines a compartment 3 for accommodating at least one juice extraction rotor 4 and at least one conveyance rotor 5.

The (or each) juice extraction rotor 4 can rotate about a first rotation axis B, which is arranged perpendicular to the ideal resting plane of the shell 2. It should be noted in this regard that the shape of the shell 2 (and of the device 1 in general) allows it to be used in a single orientation and, by virtue of this, there is a single possible ideal resting plane (which will be a table, a countertop, a shelf, etc.), and therefore with respect to this plane we can refer to the condition of perpendicularity of the first rotation axis B, without there being any doubt regarding the arrangement of the latter (for the person skilled in the art or anyone else). More simply however, we can say that the first axis B is vertical.

The (or each) conveyance rotor 5 in turn can rotate beside the juice extraction rotor 4 (beside a respective juice extraction rotor 4) about a second rotation axis C, which is arranged parallel to the first axis B (and therefore also perpendicular to the ideal resting plane, i.e. vertical) and has at least one at least partial accommodation seat 6 for at least one portion of a fruit and vegetable product A.

As will be better explained below (and as can be seen from the accompanying figures), the number of juice extraction rotors 4 and of conveyance rotors 5 can be any: when reference is made below to "a" juice extraction rotor 4 and/or to "a" conveyance rotor 5, it should be understood to apply to all (or some) of the rotors 4, 5 that are actually comprised in the device 1.

The choice to arrange the rotation axes B, C vertically makes it possible to simplify the structure, in that the products A move between the areas of the device 1 by gravity, parallel to the axes B, C, without needing to provide special movement elements (as happens with systems that use horizontal axes).

During respective useful portions of rotation of the rotors 4, 5 (about the corresponding axes B, C), the juice extraction rotor 4 penetrates at least partially into a seat 6, so as to be able to perform the juicing of the portion of the fruit and vegetable product A (or of the product A) accommodated in the seat 6. Preferably, the device 1 is configured to act, with the juice extraction rotor 4 penetrating into the seat 6, on half of the product A or in any case on a portion thereof accommodated therein, but the possibility is not ruled out of configuring the device 1 so that a whole product A can be placed in the seat 6.

The rotors 4, 5 effectively behave like matched profiles and thus perform the desired juicing of the orange (or of another fruit or other fruit and vegetable product A).

According to the invention, the device 1 comprises a tub 7 which is removably arranged in the compartment 3, in at least one juice extraction configuration, and which is configured to accommodate at least the rotors 4, 5. By "juice extraction configuration" what should effectively be understood is the condition of normal use of the device 1, in which the user can avail of it for juicing the products A (and which contrasts with the configuration obtainable via the temporary disassembly of the tub 7, for washing or maintenance).

Therefore the choice to have a removable tub 7 in the compartment 3 from this point onward achieves the set aim: the tub 7 can be easily removed from the shell 2 and with it the rotors 4, 5 are temporarily dismounted, or the components intended for the juicing and therefore designed to interact with the extracted juices, the pulp, the peel and any other part of the fruit. The rotors 4, 5 can then be easily washed (optionally, leaving them in the tub 7) or maintained, and then replaced in the compartment 3, in order to resume the use of the device 1.

In particular, the shell 2 comprises a lower footing 8 and a containment chamber 9 which is rested on the footing 8 (rigidly or removably). The compartment 3 (and the tub 7, when placed therein) is arranged inside the chamber 9, above the footing 8.

So it is the lower face of the footing 8 that is designed to rest on a table, a countertop or a shelf and which therefore identifies the ideal resting plane.

Internally, the footing 8 accommodates an apparatus for moving the rotors 4, 5, which in turn can comprise a drive assembly of at least one first rotating shaft 10 and of at least one second rotating shaft 11, which are arranged respectively along the first rotation axis B and the second rotation axis C and which support correspondingly the juice extraction rotor 4 and the conveyance rotor 5. The coaxial coupling between the shafts 10, 11 and the respective rotors 4, 5 is of the removable type (it can for example be done by interlocking and then deactivated by elastic forcing, or it can be done by threading, or in another way), so as to allow the removal of the rotors 4, 5 together with the tub 7, while the shafts 10, 11 remain inside the footing 8.

As can be seen from Figure 11, the upper ends of the shafts 10, 11 (the only parts that can be seen and which are therefore identified in the figures) protrude from the footing 8, in order to be able to mate coaxially with the respective rotors 4, 5.

In a possible embodiment of the invention, which in any case is not limiting the scope of protection claimed herein, the drive assembly can comprise a gearmotor that entrains in motion a plurality of mutually meshed gearwheels connected to the shafts 10, 11, so as to entrain the latter and the rotors 4, 5 in rotation, according to the desired rule of motion. By conveniently designing and dimensioning the kinematic mechanism, it is possible to confer any rotation speed on the two rotors 4, 5; in particular, the person skilled in the art will have no difficulty in ensuring that the speed of the juice extraction rotor 4 is sufficiently proportional to the speed of the conveyance rotor 5, in order to ensure that each complete rotation of the latter corresponds to a sufficient number of complete rotations of the former (as a function of the number of seats 6 provided along the conveyance rotor 5). Moreover, the possibility is not ruled out of providing the device 1 with different drive apparatuses, including the manual type (with the user for example acting on a crank to move the shafts 10, 11 and therefore the rotors 4, 5).

In order to allow the connection between the rotors 4, 5 arranged in the tub 7 and the shafts 10, 11 arranged below, in the footing 8, the tub 7 comprises a floor 7a provided with respective orifices 7b (it has as many orifices 7b as there are rotors 4, 5 or respective shafts 10, 11); furthermore, the tub 7 comprises a lateral surface 7c which extends (vertically) from the edge of the floor 7a. Preferably, the tub 7 is furthermore open in an upper region, in order to allow an easy access to the rotors 4, 5 (in the juice extraction configuration, it can be closed in various ways, as will be seen below).

In the preferred embodiment, illustrated in the accompanying figures for the purposes of non-limiting example of the application of the invention, the conveyance rotor 5 comprises a preferably perforated central body 12, which is elongated along the second rotation axis C and is provided laterally with at least one longitudinal slot. This slot defines a respective seat 6 and has a curved and convex transverse cross-section, in order to be capable of accommodating a substantially hemispherical portion of the fruit and vegetable product A cut beforehand, with the peel directed toward the second axis C (toward the inside) and the pulp, at the cut area, directed outward. By arranging the cut area of the pulp facing outward, we ensure that this is the part that is affected by the juice extraction rotor 4, when the latter penetrates into the seat 6.

More specifically, the central body 12 is a kind of cylinder and along its side wall there are one or more longitudinal grooves (which extend along an equal number of directrices thereof and which have a transverse cross-section shaped like a portion of circumference), which identify respective seats 6: in this regard, the accompanying figures show conveyance rotors 5 each one of which comprises four seats 6, which are constituted by an equal number of grooves which are distributed equally along the side wall of the central body 12.

With further reference to the preferred, non-limiting embodiment, the juice extraction rotor 4 comprises a main body 13 which is elongated along the first rotation axis B and which has at least one longitudinal sector 13a which is enlarged, curved and concave (shaped complementarily to the seat 6, and preferably therefore semi-cylindrical). Thus, at the above-mentioned useful portion, the sector 13a, which is preferably perforated, penetrates into a respective seat 6, in order to extract juice from the portion of the fruit and vegetable product A accommodated therein (or the entire product A accommodated therein).

As can be seen from the accompanying figures, it should be noted that the curvature of the outer edge of the sector 13a is chosen to substantially correspond to the curvature of the transverse cross-section of the seat 6 (of the longitudinal slot): when the sector 13a penetrates into the seat 6, the latter is reduced to a gap of minimal size, capable in fact of accommodating only the peel of the product A, thus ensuring an optimal juicing. But the juice can flow by gravity downward, either directly along the gap or inside one or both of the bodies 12, 13 if, as envisaged in the preferred application, one or both of the bodies are at least partially perforated.

Usefully, the rotors 4, 5 are rested on a perforated grille 14, which can be removably or fixedly coupled to the rotors 4, 5. The grille 14 in any case is accommodated inside the tub 7 and therefore it too can be easily removed when the user wants to wash the components involved in the juice extraction step (and which therefore come into contact with the products A and/or the juice) separately.

The grille 14 is (preferably) kept raised with respect to the floor 7a of the tub 7, at least in the juice extraction configuration, so as to define a compartment for collecting the extracted liquid (between the floor 7a and the grille 14), which is placed in communication with a duct for dispensing the liquid externally, through a respective manifold (an opening provided in the floor 7a).

In normal operation therefore, when the juice extraction rotor 4 penetrates with the sector 13a into the respective seat 6, the extracted juice penetrates into the holes of the sector 13a and then into the main body 13 (and optionally on the other side, into the central body 12). From there, by gravity, the liquid falls toward the collection compartment, not before being subjected to an additional filtration by virtue of the action of the grille 14, so preventing any seed or other solid waste (pulp for example) from being dispensed externally together with the juice. The device 1 can be accompanied with other components used to facilitate taking away the extracted juice, such as a platform 15 protruding from the shell 2 (from the footing 8), designed to receive a vessel D (a bottle, a drinking glass, etc.) which can be used to collect the juice supplied by an overlying spout 16 (also protruding from the shell 2) arranged at the outside end of the dispensing duct.

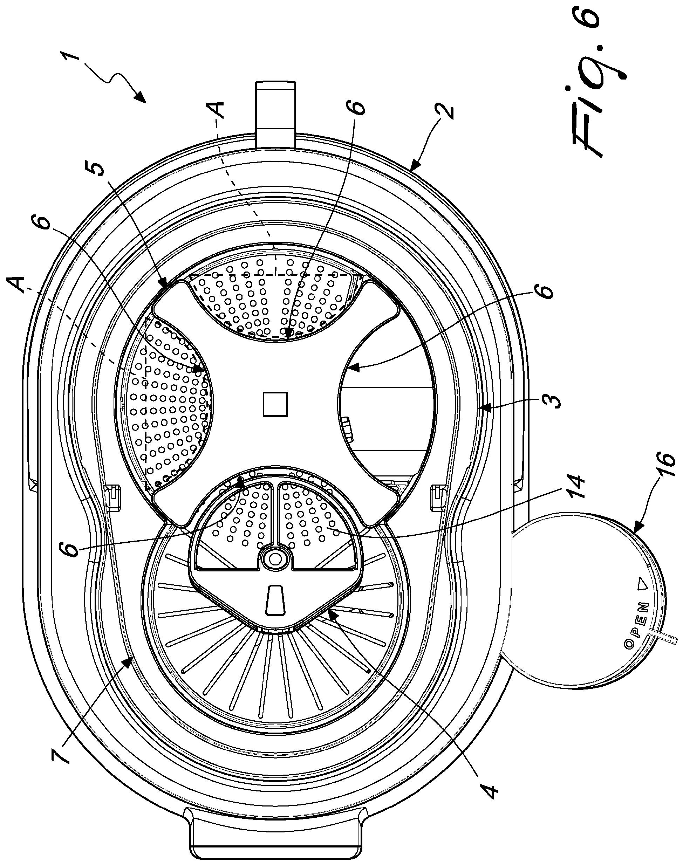

It should be noted that the portions of the products A accommodated in the seats 6 are held inside them, before the action of the juice extraction rotor 4, because the seats 6 are in fact closed off by the lateral surface 7c of the tub 7, the dimensions and shape of which are chosen to be complementary to those of the set of rotors 4, 5 (this can be seen for example from Figure 6).

Regarding the dimensioning of the device 1, it should be noted that the shape and dimensions of its components, in particular of the rotors 4, 5, of the seats 6 and of the tub 7, are chosen as a function of the type of product A, and they can be modified (even without intervening on the rest of the device 1) for a different use.

Furthermore, the possibility exists for the footing 8 to have one or more niches occupied by respective drawers 17 which are open in an upper region and are arranged at a return portion of the juice extraction rotor 5, traveled after the useful portion. Thus, the peel and the other juicing debris are progressively collected by gravity in the drawers 17, and can easily be removed by a user by extracting the drawer 17.

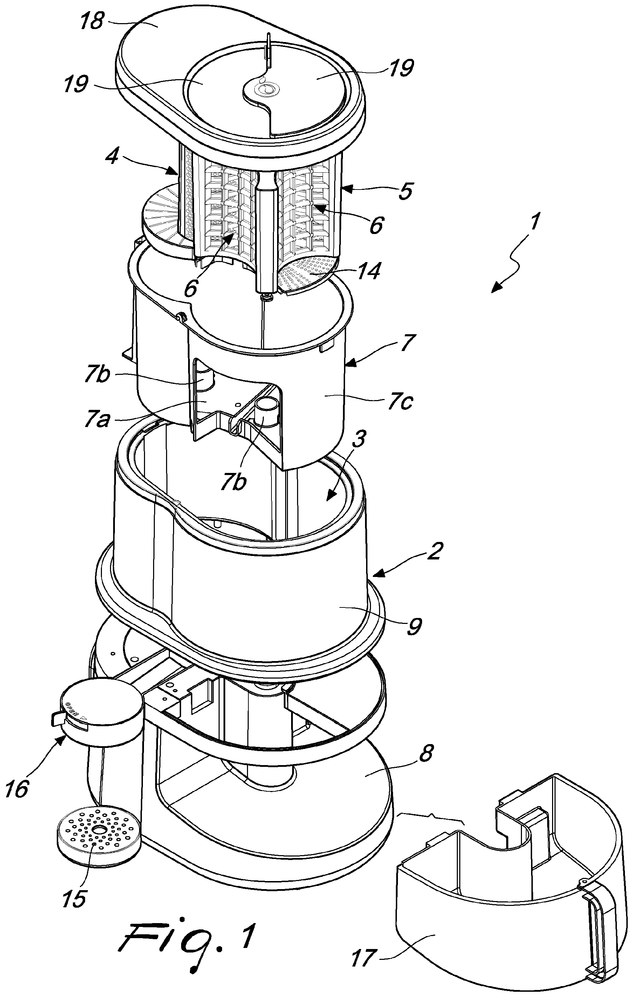

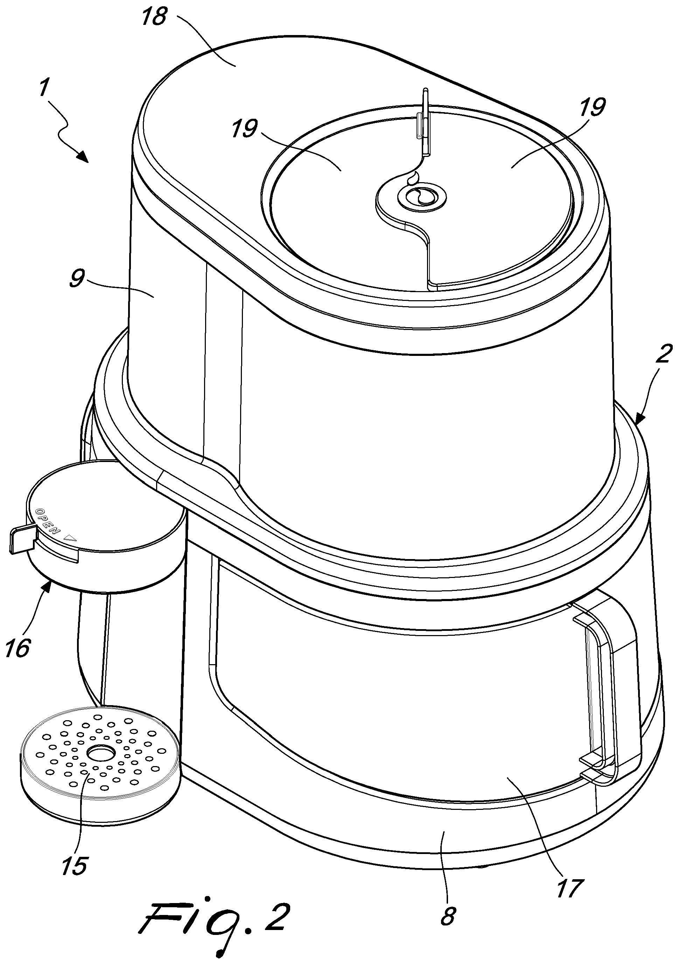

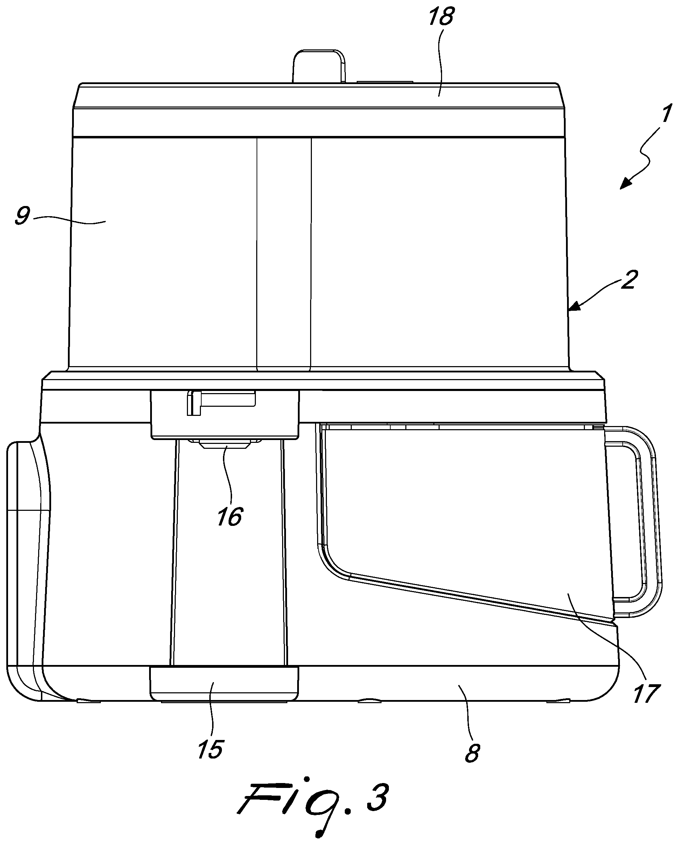

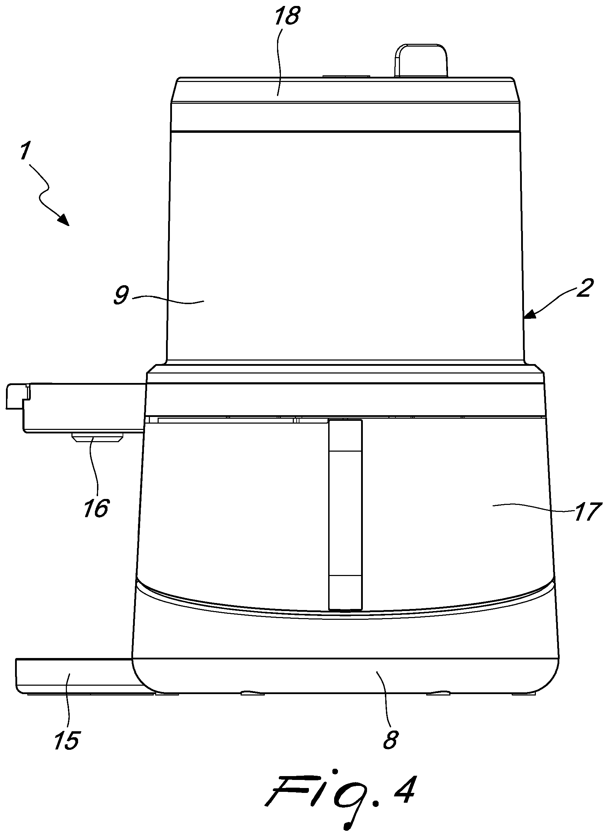

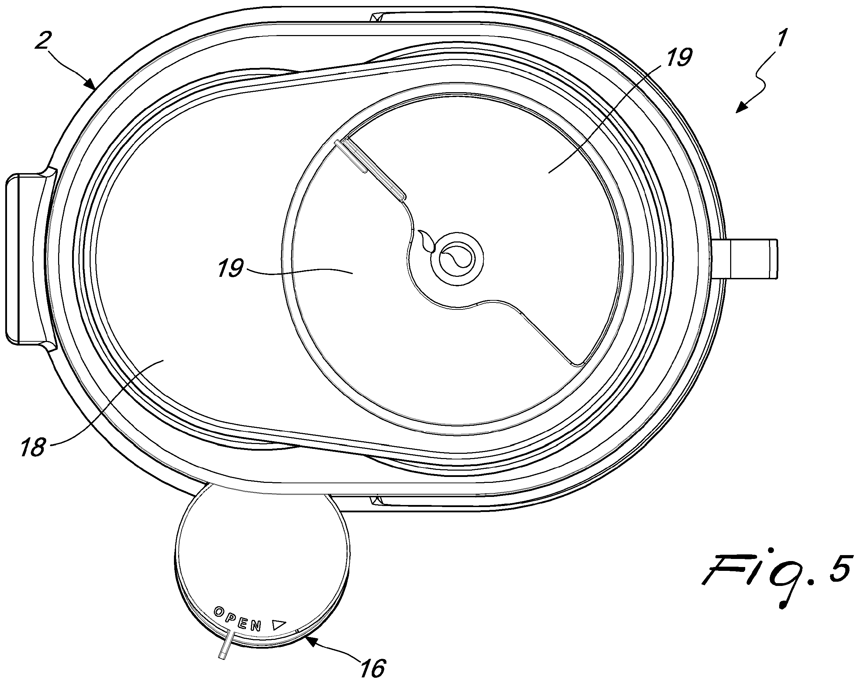

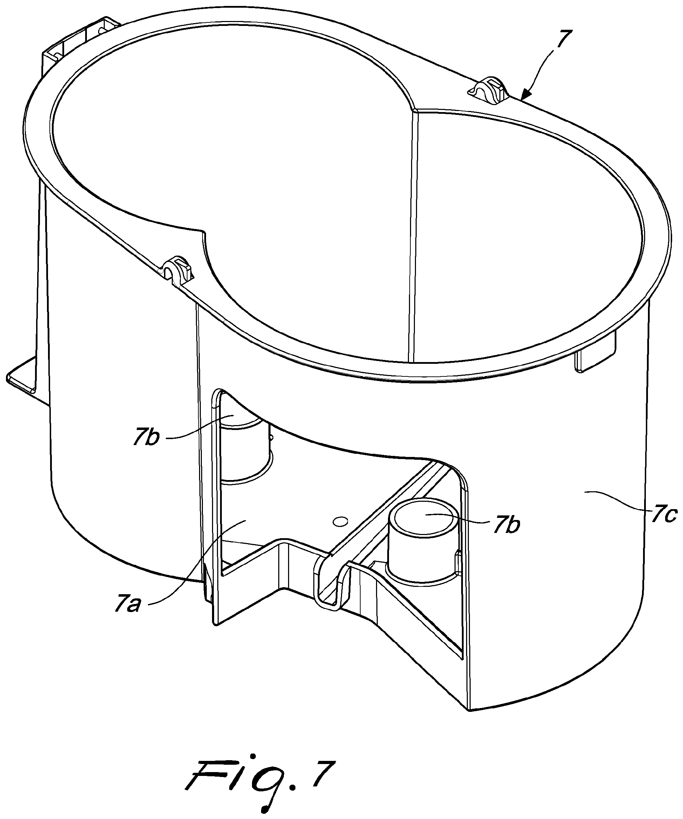

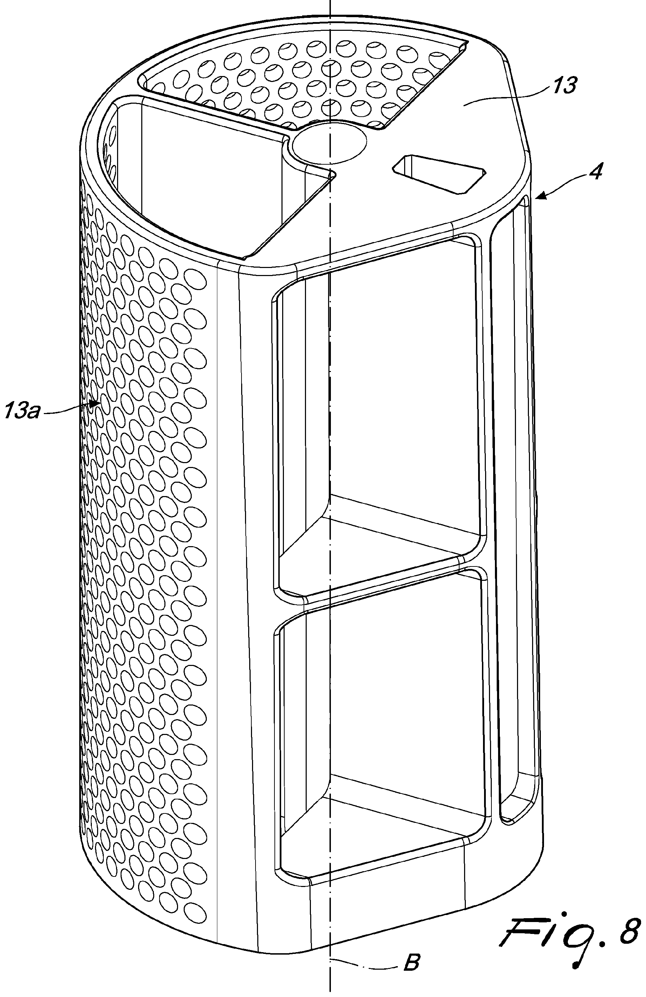

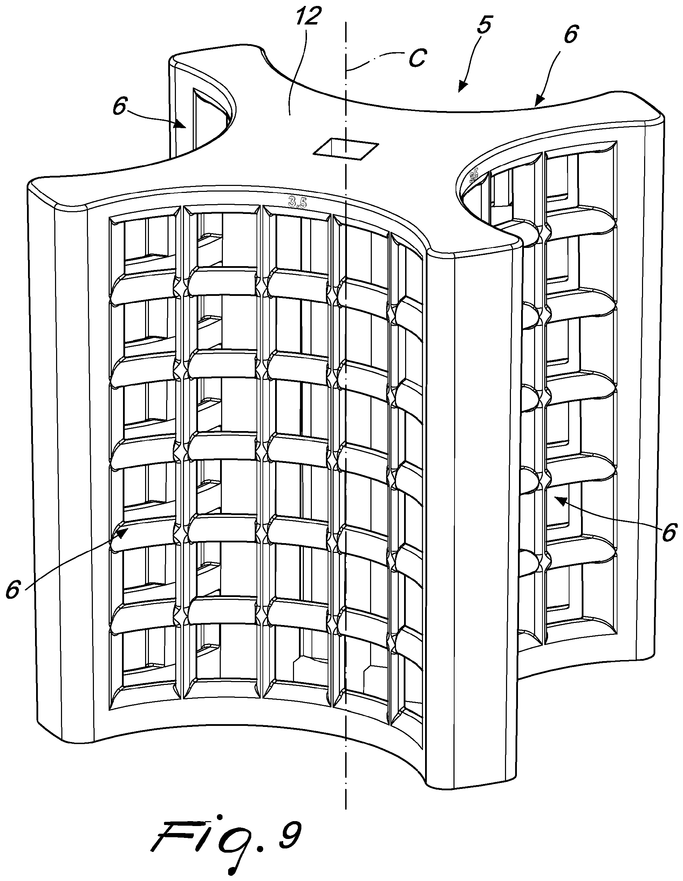

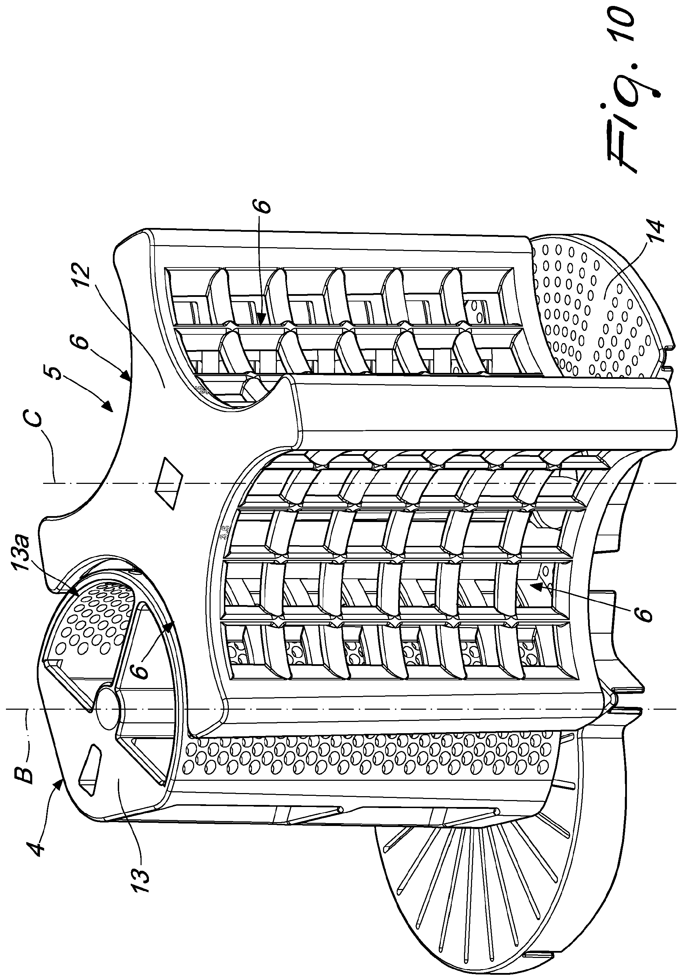

In the embodiment of the accompanying Figures 1-10, the shell 2 is closed in an upper region by a lid 18 which is removably rested on top of the containment chamber 9: the coupling between the lid 18 and the chamber 9 is preferably chosen so as to ensure a stable fastening during the juicing, but still be easy to unfasten, in order to allow the temporary removal of the lid 18 and then the extraction of the tub 7 in order to wash the rotors 4, 5 and the other components that are normally accommodated inside it.

The lid 18 has at least one access port, directed toward the seat 6 in at least one angular insertion position of the conveyance rotor 5 (the position effectively corresponding to the start of the juicing cycle); this port can be closed with at least one fan-shaped door 19, which rotates about the second rotation axis C. The door 19 prevents the introduction of dust and dirt into the seats 6 and is made rotate only when the user actually wants to place into the seat 6 the portion of the product A (cut beforehand) that the user wants to juice. There can be more than one door 19, and it may be possible to overlap them during their rotation, so as to be able to close openings shaped like an entire annulus, so as to be able to serve a greater number of seats 6.

In the embodiment of the device 1 illustrated in Figures 1-10 it is the user therefore who cuts the orange (or other product A) before introducing a portion thereof into the seat 6 through the access port of the lid 18, taking care, as seen, to arrange the peel directed toward the second axis C and the pulp, at the cut area, on the other side.

Conversely, for example in the embodiment of Figures 11-17, the device 1 can likewise comprise means for the automatic cutting of whole fruit and vegetable products A, which are configured to automatically cut a product A into two substantially hemispherical portions (thus freeing the user from this task).

In particular, in this embodiment the device 1 comprises at least one pair of conveyance rotors 5 (and a corresponding number of juice extraction rotors 4): at respective angular loading positions, at least two respective seats 6 (of a corresponding number of conveyance rotors 5) are mutually facing (as in Figure 17), so as to temporarily delimit a (cylindrical) recess 20 which is adapted to accommodate a whole fruit and vegetable product A.

The means for cutting therefore comprise a ridge 21 which protrudes internally from the tub 7 and has a sharp edge (shown only in Figure 17, it being temporarily dismounted in the others) which extends parallel to the rotation axes B, C and is arranged so as to face and be proximate to the recess 20. In this manner, during the rotation of the seats 6 toward the respective useful portions (starting from the angular loading position, in which they form the recess 20), the whole fruit and vegetable product A accommodated in the recess 20 is pushed toward the edge, and cut into two hemispherical portions which remain accommodated in respective seats 6.

Continuing in the rotation, the juice extraction is executed in a manner similar to the previous embodiment, by virtue of the juice extraction rotors 4 which penetrate into the seats 6.

Advantageously, in the embodiment now introduced, the shell 2 is provided in an upper region with a magazine 22 for the accumulation of fruit and vegetable products A, which is removably rested on the chamber 9 (in the manner already illustrated for the lid 19) and is provided with lateral containment sides 23.

The magazine 22 has an inlet leading to the seats 6, which is also regulated by closing doors or other systems for preventing the entry of dirt.

The operation of the device according to the invention is the following.

The device 1 can be fed with portions (for example hemispherical) of oranges or other products A cut beforehand or with whole products A, in the latter case leaving the task of obtaining the cut portions to the means for cutting optionally provided in the device 1.

The juice extraction operation occurs in any case in the same way: the simultaneous rotation of the juice extraction rotor 4 and of the respective conveyance rotor 5 ensures that the sector 13a of the former penetrates into the seat 6 of the latter, thus compressing the portion of the product A that was previously accommodated in the seat 6.

So in fact, the sector 13a and the seat 6 behave like two mutually meshing matched profiles, thus ensuring, during the rotation, the almost complete occupation of the groove and therefore the complete juice extraction of the portion of the product A contained in it.

As mentioned, this portion is introduced directly by the user or obtained via automatic cutting by the device 1.

By virtue of the juice extraction, the juice falls downward by gravity and is conveyed outside, exiting from the shell 2 through the spout 16.

The rotors 4, 5 continue the rotation and this makes it possible to collect the peel and other debris in the drawers 17.

The device 1 therefore makes it possible, first of all, to achieve in a practical and easy manner the extraction of juice from one or more oranges (or other products A).

In an entirely peculiar manner, the rotors 4, 5 can be easily removed by lifting and removing the tub 7 in which they are, for this purpose, accommodated. The simple action of lifting can be sufficient to remove the engagement between the rotors 4, 5 and the shafts 10, 11 below (if the design is of the interlocking type for example); or, before removing the tub 7, the user can unscrew the rotors 4, 5 or in any case remove the engagement with the shafts 10, 11.

In any case, with a few simple operations the user can lift the lid 18 or the magazine 22 and then easily remove only the tub 7 with the rotors 4, 5 (and the grille 14), without touching the rest of the device 1 and the shell 2 (in particular the more complex and delicate components accommodated in the footing 8, like the drive assembly and the shafts 10, 11). The removed components can in this way be held under a faucet or easily washed, and the juice extraction configuration can then be restored just as easily. It is equally easy to execute maintenance or repair operations on the removed components.

Following its removal, the tub 7 becomes a useful container for all the components inside it, which can thus be moved around together for washing (or to bring them to a maintenance area, for example).

The simplicity and rapidity of the operations involved makes it possible to execute the washing with any desired frequency, even very frequently, so as to ensure conditions of hygiene that are always optimal juice extraction (which involves the rotors 4, 5 and the tub 7).

The removal thus involves a limited number of components, of low weight, and is wholly straightforward even for the less experienced user, again by ensuring practical methods for washing that can be performed with any frequency.

The choice to use a removable tub 7 therefore makes it possible to achieve the set aim, in that it makes it possible to obtain a juice extraction device 1 that offers practical methods of temporary disassembly of subassemblies and individual components (the rotors 4, 5 for juicing in particular, which are lifted out and transported inside the tub 7, in a rapid and straightforward manner).

Such peculiar methods of washing are effectively used in various different types of device 1, i.e. both in devices that require the cutting beforehand of the products A, and in devices that do the cutting themselves.

In practice, the materials employed, as well as the dimensions, may be any according to requirements and to the state of the art.

Priority is claimed from the Italian Patent Application No. 102022000010613.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A juice extraction device for fruit and vegetable products (A), which comprises an outer shell (2), which internally defines a compartment (3) for accommodating at least one juice extraction rotor (4), which can rotate about a first rotation axis (B) which is perpendicular to the ideal resting plane of said shell (2), and at least one conveyance rotor (5), which can rotate beside said juice extraction rotor (4) about a second rotation axis (C), which is parallel to said first axis (B) and has at least one at least partial accommodation seat (6) for at least one portion of a fruit and vegetable product (A), during respective useful portions of rotation of said rotors (4, 5) said at least one juice extraction rotor (4) penetrating at least partially into said at least one seat (6), for the juice extraction of the at least one portion of the fruit and vegetable product (A) accommodated in said seat (6), **characterized in that** it comprises a tub (7) which is removably arranged in said compartment (3), in at least one juice extraction configuration, and is configured to accommodate at least said rotors (4, 5).

2. The device according to claim 1, **characterized in that** said shell (2) comprises a lower footing (8) and a containment chamber (9) which rests on said footing (8), said compartment (3) being arranged inside said chamber (9), above said footing (8), said footing (8) accommodating an apparatus for moving said rotors (4, 5), which comprises a drive assembly of at least one first rotating shaft (10) and of at least one second rotating shaft (11), which are arranged respectively along said first rotation axis (B) and said second rotation axis (C) and support correspondingly said juice extraction rotor (4) and said conveyance rotor (5).

3. The device according to claim 1 or 2, **characterized in that** said tub (7) comprises a floor (7a) provided with respective orifices (7b), for connection between said rotors (4, 5) and the respective said shafts (10, 11), and a lateral surface (7c) which extends from the edge of said floor (7a).

4. The device according to one or more of the preceding claims, **characterized in that** said at least one conveyance rotor (5) comprises a preferably perforated central body (12), which is elongated along said second rotation axis (C) and is provided laterally with at least one longitudinal slot which defines a respective said seat (6) and has a curved and convex transverse cross-section, for the accommodation of a substantially hemispherical portion of the fruit and vegetable product (A) cut beforehand, with the peel directed toward said second axis (C) and the pulp, at the cut area, directed outward.

5. The device according to one or more of the preceding claims, **characterized in that** said at least one juice extraction rotor (4) comprises a main body (13) which is elongated along said first rotation axis (B) and has at least one longitudinal sector (13a) which is enlarged, curved and concave, at said useful portion said sector (13a), which is preferably perforated, penetrating into a respective said seat (6), for the juice extraction of the at least one portion of the fruit and vegetable product (A).

6. The device according to one or more of the preceding claims, **characterized in that** said rotors (4, 5) rest on a perforated grille (14), which is kept raised with respect to said floor (7a) of said tub (7), in at least said juice extraction configuration, in order to define a compartment for collecting the extracted liquid, said compartment being placed in communication with a duct for dispensing the liquid externally by means of a respective manifold.

7. The device according to one or more of the preceding claims, **characterized in that** said shell (2) is closed in an upper region by a lid (18) which is removably rested on top of said containment chamber (9) and is provided with at least one access port, which faces said at least one seat (6) in at least one angular insertion position, of said conveyance rotor (5), and can be closed by means of a fan-shaped door (19), which rotates about said second rotation axis (C).

8. The device according to one or more of the preceding claims, **characterized in that** it comprises means for the automatic cutting of whole fruit and vegetable products (A), configured for the automatic cutting of a product (A) into two substantially hemispherical portions.

9. The device according to claim 8, **characterized in that** it comprises at least one pair of said conveyance rotors (5), at least two respective said seats (6) facing each other at respective angular loading positions in order to temporarily delimit a recess (20) which is adapted to accommodate a whole fruit and vegetable product (A), said means for cutting comprising a ridge (21) which internally protrudes from said tub (7) and has a sharp edge which extends parallel to said rotation axes (B, C) and is arranged so as to face and be proximate to said recess (20), during the rotation of said seats (6) toward the respective said useful portions the whole fruit and vegetable product (A) accommodated in said recess (20) being pushed toward said edge in order to cut it into two hemispherical portions.

10. The device according to claim 9, **characterized in that** said shell (2) is provided in an upper region with a magazine (22) for the accumulation of fruit and vegetable products (A), which is removably rested on said chamber (9) and is provided with lateral containment sides (23).

## Patentansprüche

1. Eine Saftgewinnungsvorrichtung für Obst- und Gemüseprodukte (A), die ein äußeres Gehäuse (2) umfasst, welches in seinem Inneren einen Hohlraum (3) für die Aufnahme mindestens eines Saftgewinnungsrotors (4) bestimmt, der sich um eine erste Drehachse (B) drehen kann, welche senkrecht zur idealen Auflageebene des Gehäuses (2) ist, und mindestens einen Beförderungsrotor (5), der sich neben dem Saftgewinnungsrotor (4) um eine zweite Drehachse (C) drehen kann, die parallel zu der ersten Achse (B) ist, und mindestens einen zumindest partiellen Aufnahmesitz (6) für mindestens einen Teil eines Obst- und Gemüseprodukts (A) hat, wobei der mindestens eine Saftgewinnungsrotor (4) während jeweiligen Nutzbereichen der Drehung der Rotoren (4, 5) zumindest teilweise in den mindestens einen Sitz (6) eindringt zur Saftgewinnung aus dem mindestens einen Teil des Obst- und Gemüseprodukts (A), das sich in dem Sitz (6) befindet; **dadurch gekennzeichnet, dass** sie einen Behälter (7) umfasst, der in mindestens einer Saftgewinnungskonfiguration herausnehmbar in dem Hohlraum (3) angeordnet und konfiguriert ist, um mindestens die Rotoren (4, 5) aufzunehmen.

2. Die Vorrichtung gemäß Anspruch 1, **dadurch gekennzeichnet, dass** das Gehäuse (2) einen unteren Sockel (8) und eine Aufnahmekammer (9) umfasst, die auf dem Sockel (8) aufliegt, wobei der Hohlraum (3) sich innerhalb der Kammer (9), oberhalb des Sockels (8), befindet, wobei der Sockel (8) eine Vorrichtung zum Bewegen der Rotoren (4, 5) enthält, die einen Antriebsaufbau für mindestens eine erste sich drehende Welle (10) und mindestens eine zweite sich drehende Welle (11) umfasst, die entlang der ersten Drehachse (B) beziehungsweise der zweiten Drehachse (C) angeordnet sind und entsprechend den Saftgewinnungsrotor (4) und den Beförderungsrotor (5) tragen.

3. Die Vorrichtung gemäß Anspruch 1 oder 2, **dadurch gekennzeichnet, dass** der Behälter (7) einen Boden (7a) umfasst, der mit entsprechenden Öffnungen (7b) zur Verbindung zwischen den Rotoren (4, 5) und den jeweiligen Wellen (10, 11) versehen ist, und eine Seitenfläche (7c), die sich vom Rand des Bodens (7a) erstreckt.

4. Die Vorrichtung gemäß einem oder mehreren der obigen Ansprüche, **dadurch gekennzeichnet, dass** der mindestens eine Beförderungsrotor (5) einen vorzugsweise perforierten zentralen Körper (12) umfasst, der entlang der zweiten Drehachse (C) lang gestreckt und seitlich mit mindestens einem Längsschlitz versehen ist, welcher den entsprechenden Sitz (6) bestimmt und einen gekrümmten und konvexen transversalen Querschnitt zur Aufnahme eines im Wesentlichen halbkugelförmigen Teils des Obst- und Gemüseprodukts (A) hat, das zuvor geschnitten wurde, wobei die Schale zu der zweiten Achse (C) hin und das Fruchtfleisch im geschnittenen Bereich nach außen gerichtet ist.

5. Die Vorrichtung gemäß einem oder mehreren der obigen Ansprüche, **dadurch gekennzeichnet, dass** der mindestens eine Saftgewinnungsrotor (4) einen Hauptkörper (13) umfasst, der entlang der ersten Drehachse (B) lang gestreckt ist und mindestens einen Längssektor (13a) hat, welcher vergrößert, gekrümmt und konkav ist, wobei der Sektor (13a), der vorzugsweise perforiert ist, in dem Nutzabschnitt in den entsprechenden Sitz (6) eindringt zur Saftgewinnung aus dem mindestens einen Teil des Obst- und Gemüseprodukts (A).

6. Die Vorrichtung gemäß einem oder mehreren der obigen Ansprüche, **dadurch gekennzeichnet, dass** die Rotoren (4, 5) auf einem perforierten Gitter (14) aufliegen, welches mindestens in der Saftgewinnungskonfiguration mit Bezug auf den Boden (7a) des Behälters (7) angehoben gehalten wird, um einen Hohlraum zum Sammeln der gewonnenen Flüssigkeit zu bestimmen, wobei der Hohlraum in Kommunikation mit einer Leitung zum Abgeben der Flüssigkeit nach außen mit Hilfe eines entsprechenden Verteilers platziert ist.

7. Die Vorrichtung gemäß einem oder mehreren der obigen Ansprüche, **dadurch gekennzeichnet, dass** das Gehäuse (2) in einem oberen Bereich durch einen Deckel (18) verschlossen ist, welcher abnehmbar auf dem oberen Ende der Aufnahmekammer (9) aufliegt und mit mindestens einer Zugangsöffnung versehen ist, die in mindestens einer winkligen Einsetzposition des Beförderungsrotors (5) dem mindestens einen Sitz (6) zugewandt ist und mit Hilfe einer gebläseförmigen Tür (19), die sich um die zweite Drehachse (C) dreht, geschlossen werden kann.

8. Die Vorrichtung gemäß einem oder mehreren der obigen Ansprüche, **dadurch gekennzeichnet, dass** sie Mittel zum automatischen Schneiden ganzer Obst- und Gemüseprodukte (A) umfasst, ausgebildet zum automatischen Schneiden eines Produkts (A) in zwei im Wesentlichen halbkugelförmige Teile.

9. Die Vorrichtung gemäß Anspruch 8, **dadurch gekennzeichnet, dass** sie mindestens ein Paar der Beförderungsrotoren (5) umfasst, wobei mindestens zwei der entsprechenden Sitze (6) einander in jeweiligen winkligen Ladepositionen zugewandt sind, um eine Einbuchtung (20) vorübergehend zu begrenzen, die ausgebildet ist, um ein ganzes Obst- und Gemüseprodukt (A) aufzunehmen; wobei die Schneidemittel einen Grat (21) umfassen, der innen von dem Behälter (7) vorsteht und eine scharfe Kante hat, die sich parallel zu den Drehachsen (B, C) erstreckt und angeordnet ist, um der Einbuchtung (20) zugewandt zu sein und an sie anzugrenzen, wobei während der Drehung der Sitze (6) zu den jeweiligen Nutzbereichen das ganze in der Einbuchtung (20) untergebrachte Obst- und Gemüseprodukt (A) zu der Kante geschoben wird, um es in zwei halbkugelförmige Teile zu schneiden.

10. Die Vorrichtung gemäß Anspruch 9, **dadurch gekennzeichnet, dass** das Gehäuse (2) in einem oberen Bereich mit einem Magazin (22) zum Sammeln von Obst- und Gemüseprodukten (A) versehen ist, welches abnehmbar auf der Kammer (9) aufliegt und mit lateralen Einfassungsseiten (23) ausgestattet ist.

## Revendications

1. Dispositif d'extraction de jus pour produits de type fruits et légumes (A), qui comprend une enveloppe extérieure (2), qui définit intérieurement un compartiment (3) destiné à loger au moins un rotor d'extraction de jus (4), qui peut tourner autour d'un premier axe de rotation (B) perpendiculaire au plan de repos idéal de ladite enveloppe (2), et au moins un rotor de transport (5), qui peut tourner à côté dudit rotor d'extraction de jus (4) autour d'un deuxième axe de rotation (C) parallèle audit premier axe (B) et comportant au moins un siège de logement au moins partiel (6) pour au moins une partie d'un produit de type fruits et légumes (A), pendant les parties utiles respectives de la rotation desdits rotors (4, 5), ledit au moins un rotor d'extraction de jus (4) pénétrant au moins partiellement dans ledit au moins un siège (6), pour l'extraction du jus de la au moins une partie du produit de type fruits et légumes (A) logé dans ledit siège (6), **caractérisé en ce qu'**il comprend une cuve (7) qui est disposée de manière amovible dans ledit compartiment (3), dans au moins une configuration d'extraction de jus, et qui est configurée pour loger au moins lesdits rotors (4, 5).

2. Le dispositif selon la revendication 1, **caractérisé en ce que** ladite enveloppe (2) comprend une base inférieure (8) et une chambre de confinement (9) qui repose sur ladite base (8), ledit compartiment (3) étant disposé à l'intérieur de ladite chambre (9), au-dessus de ladite base (8), ladite base (8) logeant un appareil pour déplacer lesdits rotors (4, 5), qui comprend un ensemble d'entraînement d'au moins un premier arbre rotatif (10) et d'au moins un deuxième arbre rotatif (11), qui sont disposés respectivement le long dudit premier axe de rotation (B) et dudit deuxième axe de rotation (C) et supportent de manière correspondante ledit rotor d'extraction de jus (4) et ledit rotor de transport (5).

3. Dispositif selon la revendication 1 ou 2, **caractérisé en ce que** ladite cuve (7) comprend un fond (7a) muni d'orifices respectifs (7b), pour la connexion entre lesdits rotors (4, 5) et lesdits arbres respectifs (10, 11), et une surface latérale (7c) qui s'étend à partir du bord dudit fond (7a).

4. Dispositif selon une ou plusieurs des revendications précédentes, **caractérisé en ce que** ledit au moins un rotor de transport (5) comprend un corps central (12) de préférence perforé , qui est allongé le long dudit deuxième axe de rotation (C) et est muni latéralement d'au moins une fente longitudinale qui définit un dit siège respectif (6) et présente une section transversale courbe et convexe, pour recevoir une partie sensiblement hémisphérique du produit de type fruits et légumes (A) préalablement coupé, avec la peau dirigée vers ledit deuxième axe (C) et la pulpe, au niveau de la zone de coupe, dirigée vers l'extérieur.

5. Le dispositif selon une ou plusieurs des revendications précédentes, **caractérisé en ce que** ledit au moins un rotor d'extraction de jus (4) comprend un corps principal (13) qui est allongé le long dudit premier axe de rotation (B) et comporte au moins un secteur longitudinal (13a) qui est élargi, courbe et concave, au niveau de ladite partie utile, ledit secteur (13a), qui est de préférence perforé, pénétrant dans un siège respectif (6), pour l'extraction du jus de la au moins une partie du produit de type fruits et légumes (A).

6. Le dispositif selon une ou plusieurs des revendications précédentes, **caractérisé en ce que** lesdits rotors (4, 5) reposent sur une grille perforée (14), qui est maintenue surélevée par rapport audit fond (7a) de ladite cuve (7), au moins dans ladite configuration d'extraction de jus, afin de définir un compartiment pour recueillir le liquide extrait, ledit compartiment étant mis en communication avec un conduit pour distribuer le liquide à l'extérieur au moyen d'un collecteur respectif.

7. Dispositif selon une ou plusieurs des revendications précédentes, **caractérisé en ce que** ladite enveloppe (2) est fermée dans une région supérieure par un couvercle (18) qui repose de manière amovible sur le dessus de ladite chambre de confinement (9) et est pourvu d'au moins un orifice d'accès, qui fait face audit au moins un siège (6) dans au moins une position d'insertion angulaire, dudit rotor de transport (5), et peut être fermé au moyen d'une porte en forme d'éventail (19), qui tourne autour dudit deuxième axe de rotation (C).

8. Le dispositif selon une ou plusieurs des revendications précédentes, **caractérisé en ce qu'**il comprend des moyens pour la découpe automatique de produits de type fruits et légumes entiers (A), configurés pour la découpe automatique d'un produit (A) en deux portions sensiblement hémisphériques.

9. Le dispositif selon la revendication 8, **caractérisé en ce qu'**il comprend au moins une paire desdits rotors de transport (5), au moins deux desdits sièges respectifs (6) se faisant face dans des positions de chargement angulaires respectives afin de délimiter temporairement un évidement (20) qui est adapté pour recevoir un produit de type fruits et légumes entier (A), lesdits moyens de découpe comprenant une arête (21) qui fait saillie à l'intérieur de ladite cuve (7) et présente un bord tranchant qui s'étend parallèlement auxdits axes de rotation (B, C) et est agencé de manière à faire face et à être proche dudit évidement (20), pendant la rotation desdits sièges (6) vers lesdites parties utiles respectives, le produit de type fruits et légumes entier (A) logé dans ledit évidement (20) étant poussé vers ledit bord afin de le couper en deux parties hémisphériques.

10. Dispositif selon la revendication 9, **caractérisé en ce que** ladite enveloppe (2) est pourvue dans une région supérieure d'un magasin (22) pour l'accumulation des produits de type fruits et légumes (A), qui repose de manière amovible sur ladite chambre (9) et est pourvu de côtés de confinement latéraux (23).
